Europäisches Patentamt

European Patent Office

Office européen des brevets

(19)

(11) Numéro de publication: **0 145 562**
**A2**

(12)
# DEMANDE DE BREVET EUROPEEN

(21) Numéro de dépôt: 84402327.5

(22) Date de dépôt: 15.11.84

(51) Int. Cl.⁴: **A 44 C 11/02, F 16 B 45/02**

(30) Priorité: 21.11.83 FR 8318471
12.11.84 FR 8417203

(43) Date de publication de la demande: 19.06.85
Bulletin 85/25

(84) Etats contractants désignés: **AT BE CH DE GB IT LI LU NL SE**

(71) Demandeur: **Krahenbuhl, Roland, 30 route de Nogent sur Seine Soucy, F-89100 Sens (FR)**

(72) Inventeur: **Krahenbuhl, Roland, 30 route de Nogent sur Seine Soucy, F-89100 Sens (FR)**

(74) Mandataire: **Madeuf, René Louis et al, Cabinet Madeuf 3, Avenue Bugeaud, F-75116 Paris (FR)**

(54) Fermoir pou chaines, bracelets ou objets analogues.

(57) Fermoir pour chaînes, bracelets ou objects analogues qui comprend un corps principal (1) massif relié à son extrémité (3) au bijou, puis ce corps principal est évidé dans sa zone centrale (5) et supporte un pied (7) terminé par un axe (8) sur lequel peut pivoter un basculeur (9) en forme d'équerre dont la branche verticale (9b) est soumise à l'action d'un ressort-lame unique (11) de façon que, dans la position de repos du basculeur (9), celui-ci coopérant avec l'extrémité en crochet (2) du corps principal (1) assure ainsi le maintien de l'extrémité mobile (6) du bijou, l'ensemble sus-décrit étant enfermé dans un boîtier (12) présentant sur ses parois latérales verticales des fenêtres (13) dans lesquelles peut coulisser la traverse (15) d'une pièce mobile (14) permettant de faire effectuer au basculeur (9) une rotation afin de dégager l'extrémité de l'anneau du crochet (2) pour sortir la partie ou extrémité libre (6) du bijou ou au contraire l'introduction derrière l'anneau (2) afin d'accrocher le bijou au cou ou au poignet de la personne se faisant automatiquement sans manoeuvre de la pièce mobile coulissante (14) caractérisé en ce que le basculeur (9) en forme d'équerre dont la branche verticale (9b) est soumise à l'action d'un ressort-lame unique (11) comporte une extrémité (9a) qui est située plus bas que l'extrémité terminale du crochet (2) afin d'améliorer la sécurité et de faciliter l'introduction de la pièce (6).

## Fermoir pour chaînes, bracelets ou objets analogues.

On connaît déjà de nombreux fermoirs utilisés en bijouterie , par exemple pour des chaînes, des colliers de
perles, des bracelets ou objets analogues. Mais ces
fermoirs ne sont pas d'une grande sécurité du fait de
leur petite taille, leur mécanisme est extrêmement
fragile et peut donc s'enrayer facilement. Ils comportent également des organes si petits que leur résistance
est faible.

Ces fermoirs nécessitent donc obligatoirement l'emploi
d'un petit élément, dit chaîne de sûreté, permettant
de doubler la sécurité.

La présente invention remédie à ces inconvénients en
créant un fermoir de sûreté pour la bijouterie qui, tout
en étant d'un volume extrêmement réduit, est d'une conception simple  et permet donc l'emploi de pièces suffisamment
solides pour donner une grande sécurité de fermeture.

Conformément à l'invention,le fermoir comprend un corps principal
massif relié à son extrémité au bijou, ce corps principal étant
évidé dans sa zone centrale et supportant un pied
terminé par un axe sur lequel peut pivoter un basculeur en
forme d'équerre dont la branche verticale est soumise
à l'action d'un ressort-lame unique de façon que, dans
la position de repos du basculeur, celui-ci coopérant
avec l'extrémité en crochet du corps principal assure
ainsi le maintien de l'extrémité mobile du bijou, l'ensemble sus-décrit étant enfermé dans un boîtier présentant
sur ses parois latérales verticales des fenêtres dans
lesquelles peut coulisser la traverse d'une pièce mobile
permettant de faire effectuer au basculeur une rotation
afin de dégager l'extrémité de l'anneau du crochet pour
sortir la partie ou extrémité libre du bijou ou au
contraire l'introduction derrière l'anneau afin d'accrocher le bijou au cou ou au poignet de la personne et cela automatiquement sans manoeuvre de la pièce mobile coulissante, est caractérisé en ce que le basculeur en forme d'équerre dont la branche verticale est soumise à l'action d'un ressort-lame unique comporte une extrémité qui est située plus bas que l'extrémité terminale du crochet afin d'améliorer la sécurité et de faciliter l'introduction de la pièce.

Suivant une autre caractéristique de l'invention, la pièce mobile comporte, sur ses parois latérales, des stries facilitant la manoeuvre du fermoir et des redents de la pièce coulissante forment une butée avec des bords du boîtier pour limiter le déplacement de la pièce.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une coupe longitudinale du fermoir.

La fig. 2 est une coupe suivant la ligne II-II montrant le fermoir en vue de dessus.

La fig. 3 est une élévation latérale d'une variante de réalisation d'une pièce du fermoir.

La fig. 4 est une coupe longitudinale d'un autre fermoir en position de verrouillage.

La fig. 5 est une coupe suivant la ligne V-V de la fig. 4.

La fig. 6 est une coupe suivant la ligne VI-VI de la fig. 4.

La fig. 7 est une coupe suivant la ligne VII-VII de la fig. 4.

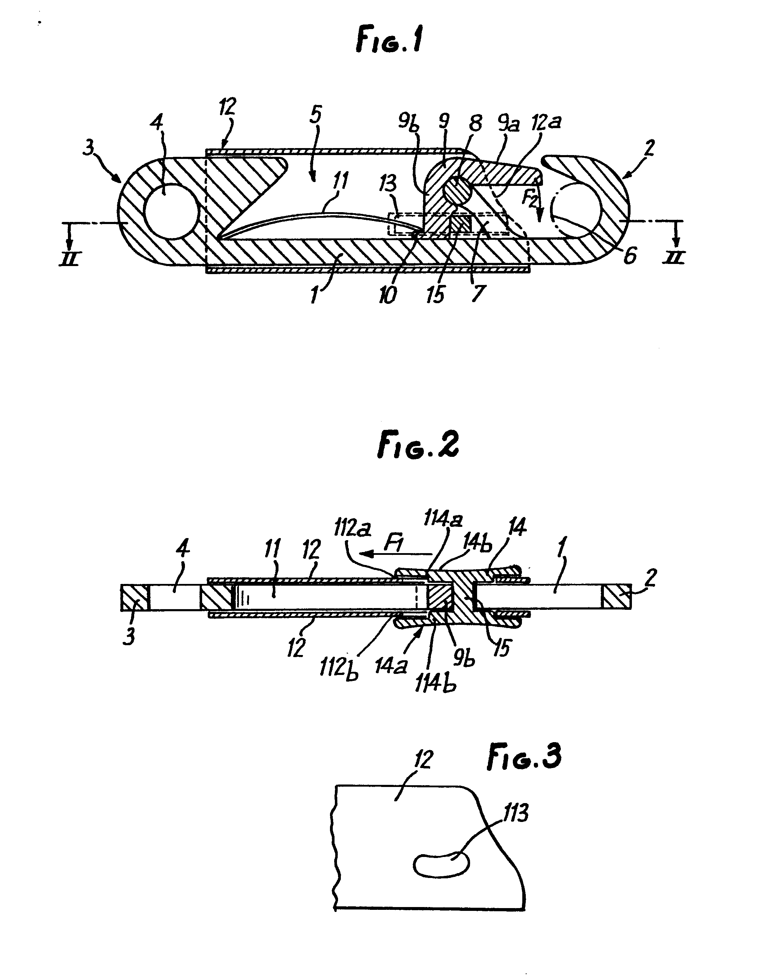

A la fig. 1, le fermoir est constitué par un corps principal 1 de forme sensiblement parallélépipédique dont l'extrémité droite 2 affecte la forme d'un crochet tandis que l'extrémité gauche 3 est massive et présente un trou central 4 destiné à la fixation d'une des extrémités de la chaîne, du collier ou d'autres objets de bijouterie.

La zone centrale 5 du corps principal 1 est évidée de façon à ce que l'extrémité droite 2 forme un anneau d'accrochage pour l'autre extrémité de la chaîne, du collier ou autres articles de bijouterie.

Cette partie du bijou est schématisée par un trait mixte 6.

La zone centrale évidée 5 présente, près de l'anneau d'accrochage 2, un pied 7 qui est donc solidaire du corps principal 1 et qui supporte un axe d'accrochage 8 sur lequel est monté fou un basculeur 9 présentant sensiblement la forme d'une équerre dont la branche horizontale 9a coopère avec l'anneau d'accrochage 2 pour le maintien de l'extrémité du bijou 6 tandis que la branche verticale 9b présente un redent 10 à sa partie inférieure qui sert de point d'accrochage à un ressort-lame 11 tendu entre le fond de la zone centrale évidée 5 près de l'extrémité 3 et le pied du basculeur 9.

Du fait de cette position arquée, la lame-ressort 11 tend à maintenir le basculeur 9 dans la position représentée à la fig. 1, c'est-à-dire de façon à ce que le fermoir soit en position fermée emprisonnant l'extrémité 6 du

4

bijou. De plus, l'extrémité 9a du basculeur est située plus basse que l'extrémité du crochet 2 afin d'améliorer la sécurité et faciliter l'introduction de la pièce 6.

L'ensemble sus-décrit est revêtu dans la zone centrale évidée 5 d'un boîtier 12 présentant, à sa partie droite, une zone dégagée 12a permettant une libre rotation du basculeur 9. Cette forme de la zone dégagée 12a ne permet pas à l'extrémité du bijou 6 de venir sous le basculeur 9 débloquer l'ouverture du fermoir.

De plus, le boîtier 12 présente, dans sa partie droite inférieure, deux fenêtres 13 qui sont ouvertes du côté du crochet 2 et dans lesquelles s'engagent les parties extérieures d'une pièce coulissante 14 (voir fig. 2) , pièce coulissante comportant dans sa zone médiane une traverse 15 prenant appui contre la partie inférieure avant de la branche verticale 9b du basculeur 9 de façon que lorsque l'on pousse dans le sens de la flèche $F_1$ (fig. 2) la pièce coulissante 14 le long des parois extérieures verticales du boîtier 12 , la traverse 15 en coulissant dans les fenêtres 13 pousse la branche verticale 9b du basculeur contre l'action du ressort-lame 11, ce mouvement provoquant le pivotement dans le sens de la flèche $F_2$ (fig. 1) du basculeur 9. Dans certains cas, les fenêtres 13 sont remplacées par des ouvertures 113 (voir fig. 3) percées dans le boîtier 12 mais alors la traverse 15 est réalisée en deux parties à section ronde.

La branche horizontale 9a de ce basculeur dégage donc le crochet 2, ce qui permet de faire sortir l'extrémité 6 du bijou. En relâchant la pression exercée sur la pièce coulissante 14, la lame -ressort 11 ramène le basculeur 9 dans sa position normale et repousse ainsi la pièce coulissante 14 dans sa position de repos.

Il est à signaler que les parois latérales verticales de la pièce coulissante 14 comportent généralement des stries 14a, 14b de préhension facilitant la manoeuvre de cette pièce coulissante à l'aide des doigts de la personne mettant en place le bijou.

En général, l'ensemble des pièces constituant le fermoir est réalisé en or ou en métal précieux. Seule, la lame-ressort est en acier spécial. Il est à remarquer, de plus, que la traverse 15 est d'une grandeur telle que, lorsqu'elle prend appui d'un côté sur le boîtier 12 et de l'autre côté sur le pied 7, elle laisse un jeu suffisant pour le libre fonctionnement du basculeur 9.

De même les redents 114a et 114b de la pièce coulissante 14 forment une butée avec les bords 112a et 112b du boîtier 12 pour limiter le déplacement de la pièce 14.

Dans l'exemple de réalisation précédent, il s'est avéré cependant, que la pièce coulissante en H assurant l'ouverture du fermoir était parfois difficile à manoeuvrer du fait que des grosses impuretés (sable par exemple) pouvaient se loger de façon permanente, dans l'espace réservé au mouvement du basculeur compris entre deux parties du boîtier, le pied et la partie horizontale inférieure du basculeur gênant ainsi le mouvement de ce dernier qui ne peut se faire complètement causant une difficulté pour libérer l'extrémité du bijou.

Ces difficultés sont particulièrement désagréables lorsque la personne portant le bijou se trouve en vacances sur une plage ou en déplacement dans des zones géographiques très polluées.

La seconde réalisation remédie à ces inconvénients en créant un fermoir pour chaînes, bracelets ou objets analogues dont la fermeture est évidée de façon à faciliter la manoeuvre pour l'entrée et la sortie de la partie terminale du bijou dont le fermoir assure une rotation parfaite du basculeur et est étanche aux grosses impuretés.

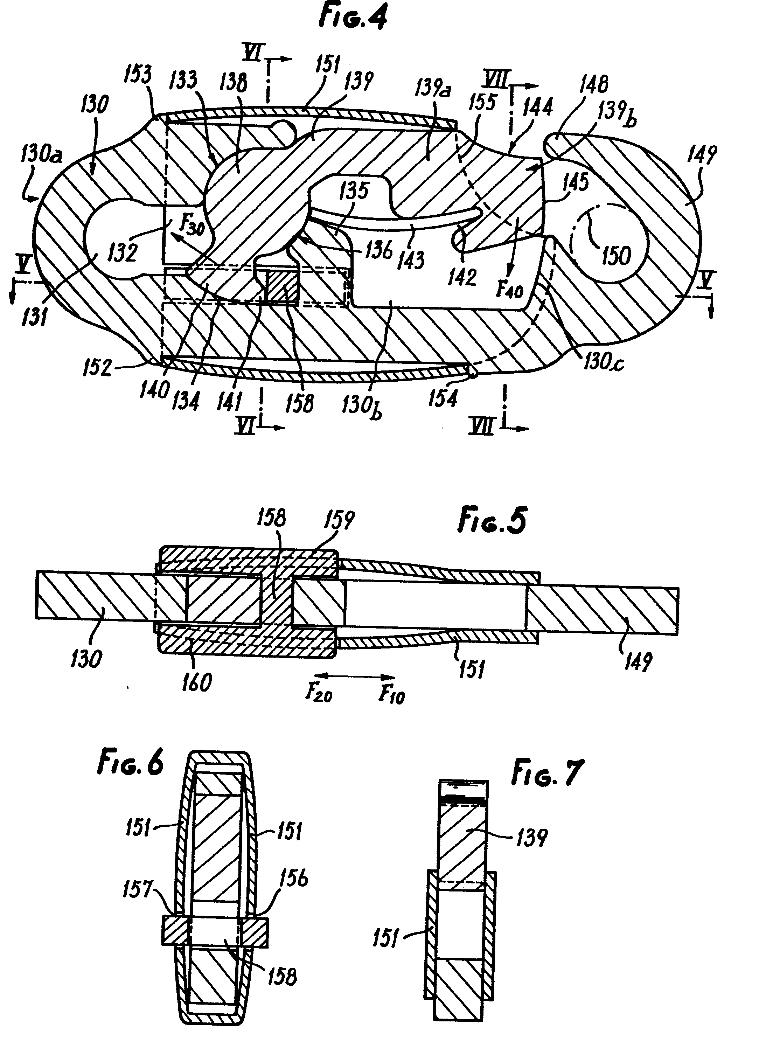

A la fig. 4, le fermoir est constitué par un corps principal massif 130 qui présente, dans sa zone avant 130a la forme d'un anneau 131 dont l'évidement central se prolonge par un couloir 132 aboutissant, à sa partie supérieure, à un évidement semi-cylindrique 133 et, à sa partie inférieure, à une chambre arquée 134.

Le corps 130 est complètement évidé dans sa zone centrale 130b mais présente, entre la chambre arquée et la zone centrale 130b un doigt vertical 135 dont l'extrémité supérieure est arrondie en 136 de façon à former, avec l'évidement semi-cylindrique 133, deux supports semi-cylindriques pour la zone centrale cylindrique 138 du basculeur 139 dont le pied 140 repose sur la surface supérieure de la chambre arquée 134 en présentant un prolongement 141.

La partie horizontale 139a du basculeur comporte une échancrure 142 dans laquelle se loge l'une des extrémités d'un ressort-lame 143 dont l'autre extrémité vient en butée contre la partie cylindrique centrale 138 du basculeur, sans gêner sa libre rotation. Le ressort appuie sur le dessus du pied 135. Il est bandé par la forme de l'échancrure 142, et, lorsque le basculeur se déplace dans le sens de la flèche $F_{40}$, le ressort roule sur le rayon de la partie arrondie supérieure du doigt vertical 135.

Finalement, l'extrémité 139a du basculeur comporte, à sa partie supérieure, une découpe cylindrique 144 et, à sa partie avant, une face légèrement arrondie 145 qui est disposée de façon à affleurer le bord 130c de l'évidement central 130b.

7

En position de fermeture, le basculeur 139 occupe la position représentée à la fig. 4 et l'arête avant, formée par la découpe 144 et la face arrondie 145, se trouve très près de l'extrémité supérieure 148 du crochet 149 terminant le corps principal massif 130. Ce crochet est destiné à recevoir l'anneau 150 d'un bijou qui est fermé par le fermoir sus-décrit.

Comme cela est visible aux fig. 4, 5, 6 et 7, la partie centrale du corps principal massif 130 maintient un boîtier 151 du fait des redents 152, 153, 154 prévus à cet effet sur la périphérie extérieure du corps principal 130. Le boîtier 151 présente sur sa face avant une large échancrure 155 dégageant complètement le crochet 149 et l'extrémité 139b du basculeur 139.

Finalement, les parois latérales du boîtier 151 comportent deux saignées parallèles 156, 157 permettant le passage d'un barreau 158 solidaire de deux glissières 159, 160 qui peuvent se déplacer horizontalement dans le sens de la flèche $F_{20}$ puis dans le sens de la flèche $F_{10}$ (voir fig. 5) en repoussant le prolongement 141 du pied 140 dans le sens de la flèche $F_{30}$ contre l'action du ressort-lame 143 afin que le basculeur 139 pivote dans le sens de la flèche $F_{40}$ (voir fig. 4) pour dégager l'entrée du crochet 149 et permettre ainsi soit l'introduction soit le retrait de l'anneau 150. Il suffit de relâcher ensuite la pression exercée sur les glissières 159, 160 pour que, sous l'action du ressort-lame 149, celles-ci reviennent dans le sens de la flèche $F_{10}$ (voir fig. 5), à leur position de repos en dégageant le barreau 158 et, de ce fait, le basculeur 139 reprend la position représentée à la fig. 4.

Comme cela apparaît dans la description ci-dessus, il n'y a plus d'axe pour le basculeur 138, ce qui facilite la fabrication du fermoir, et la rotation de ce basculeur

8

est guidée par quatre surfaces en partie cylindrique à savoir l'évidement semi-circulaire 133, la zone arrondie 136 du doigt 135, la chambre arquée 134 et la zone arrondie 130c du corps principal 130 lui assurant un équilibre parfait.

Le boîtier 151 est maintenu par les redents 152, 153, 154 formant butées et, comme ce boîtier, légèrement souple et élastique, est placé à force entre les butées 152 et 154 il est parfaitement maintenu.

Ainsi, au repos, le basculeur est guidé en rotation par trois surfaces concentriques à son centre de rotation, et, dès l'ouverture du basculeur, vient s'ajouter un quatrième guide 130c très important car il assure, pour la partie inférieure de l'ouverture, l'étanchéité du fermoir.

La partie supérieure du basculeur vers l'ouverture en contact avec le boîtier assure l'étanchéité et les deux faces parallèles du boîtier non bombées assurent par un jeu minimum la libre rotation du basculeur tout en assurant l'étanchéité.

En position de repos du basculeur, donc fermé, il est impossible à de grosses impuretés de pénétrer à l'intérieur du fermoir, du côté de l'ouverture mais également du côté du pied vertical du basculeur et de la partie supérieure qui sont concentriques, comme décrit ci-dessus, et en liaison avec les parois verticales du boîtier.

Finalement, la forme intérieure du crochet 149 coopérant avec la large échancrure 155 de la partie avant du boîtier 151 et la découpe terminale supérieure du basculeur 139a permet soit l'introduction soit la sortie aisée de l'anneau 150 de façon qu'à l'aide d'une seule main, en manoeuvrant les glissières 159, 160, on puisse ouvrir ou fermer le fermoir en faisant sortir ou entrer l'anneau 150 avec sûreté.

Revendications

1 - Fermoir pour chaînes, bracelets ou objets analogues comprenant un corps principal (1) massif relié à son extrémité (3) au bijou, puis ce corps principal est évidé dans sa zone centrale (5) et supporte un pied (7) terminé par un axe (8) sur lequel peut pivoter un basculeur (9) en forme d'équerre dont la branche verticale (9b) est soumise à l'action d'un ressort-lame unique (11) de façon que , dans la position de repos du basculeur (9), celui-ci coopérant avec l'extrémité en crochet (2) du corps principal (1) assure ainsi le maintien de l'extrémité mobile (6) du bijou, l'ensemble sus-décrit étant enfermé dans un boîtier (12) présentant sur ses parois latérales verticales des fenêtres (13) dans lesquelles peut coulisser la traverse (15) d'une pièce mobile sensiblement en H (14) permettant de faire effectuer au basculeur (9) une rotation afin de dégager l'extrémité de l'anneau du crochet (2) pour sortir la partie ou extrémité libre (6) du bijou ou au contraire l'introduction derrière l'anneau (2) afin d'accrocher le bijou au cou ou au poignet de la personne et cela automatiquement sans manoeuvre de la pièce mobile coulissante (14), caractérisé en ce que le basculeur (9) en forme d'équerre dont la branche verticale (9b) est soumise à l'action d'un ressort-lame unique (11) comporte une extrémité (9a) qui est située plus bas que l'extrémité terminale du crochet (2) afin d'améliorer la sécurité et de faciliter l'introduction de la pièce (6).

2 - Fermoir pour chaînes, bracelets ou objets analogues suivant la revendication 1 dans lequel la pièce mobile (14) comporte, sur ses parois latérales, des stries (14a, 14b) facilitant la manoeuvre du fermoir, caractérisé en ce que des redents (114a, 114b) de la pièce coulissante (14) forment une butée avec des bords (112a - 112b) du boîtier (12) pour limiter le déplacement de la pièce (14).

10

3 - Fermoir pour chaînes, bracelets ou objets analogues qui comporte un corps principal massif relié à l'une de ses extrémités, au bijou et qui est évidé dans sa zone centrale pour supporter un pied terminé par une forme semi-circulaire concentrique au point de centre d'un basculeur en forme d'équerre dont la branche verticale est soumise à l'action d'un ressort-lame de façon que, dans la position de repos du basculeur, celui-ci coopérant avec l'autre extrémité en crochet du corps principal assure ainsi le maintien de l'extrémité mobile du bijou, cet ensemble étant enfermé dans un boîtier présentant, sur ses parois latérales verticales, des fenêtres dans lesquelles peut coulisser la traverse d'une pièce mobile sensiblement en H permettant de faire effectuer au basculeur une rotation afin de dégager du crochet l'anneau terminal solidaire de l'extrémité libre du bijou ou au contraire pour l'introduction de cet anneau derrière l'extrémité en crochet du corps principal afin d'accrocher le bijou au cou ou au poignet de la personne, automatiquement, sans manoeuvrer la pièce mobile coulissante (139), ce basculeur étant caractérisé en ce qu'il comporte une zone centrale cylindrique (138) qui repose en premier dans un évidement semi-cylindrique (133) du corps principal (130), concentrique au centre de rotation du basculeur, en second dans un arc de cercle (136) concentrique au centre de rotation du basculeur à l'extrémité d'un doigt vertical (135) solidaire du corps principal (130), ce basculeur étant guidé par son pied (140) sur la surface supérieure d'une chambre arquée (134), concentrique au centre de rotation du basculeur, prévue à la base du corps principal (130) et, enfin vers l'extrémité de la branche horizontale, par un arc de cercle (145), également concentrique au centre de rotation de celui-ci, venant lors de l'ouverture se guider dans une forme semi-circulaire (130c), concentrique au centre

11

de rotation du basculeur, aménagée dans le corps principal.

4 - Fermoir suivant la revendication 3, caractérisé en ce que le basculeur (139) est normalement maintenu dans sa position haute, c'est-à-dire dans la position de fermeture du fermoir par un ressort-lame (143) prenant appui, d'une part, sur le sommet du doigt (135) contre la partie cylindrique centrale (138) et, d'autre part, dans une échancrure (142) de l'avant du basculeur (139).

5 - Fermoir suivant l'une des revendications 3 ou 4, caractérisé en ce que la partie supérieure avant du basculeur (139) présente une découpe (144) et une face avant arrondie (145) dont l'angle de jonction est situé très près de l'extrémité supérieure (148) du crochet (149) du fermoir en occupant tout l'espace situé entre les bords latéraux du boîtier (151) et l'échancrure (155) de ce même boîtier afin d'éviter, lorsque le fermoir est en position normale de repos, c'est-à-dire fermé, l'introduction dans le corps principal de grosses particules risquant de bloquer le fermoir.

**FIG.1**

**FIG.2**

**FIG.3**

**Fig.4**

**Fig.5**

**Fig.6**

**Fig.7**